# EUROPEAN PATENT SPECIFICATION

(11) **EP 1 929 186 B1**
(45) Date of publication and mention of the grant of the patent: **12.09.2012**
(21) Application number: 06758045.6
(22) Date of filing: 07.07.2006
(51) Int. Cl.: F16H 61/02, F16H 59/60

(54) **A METHOD FOR IDENTIFYING A ROAD CONDITION DURING DRIVING OF A VEHICLE**
VERFAHREN ZUR IDENTIFIZIERUNG EINES STRASSENZUSTANDS BEIM FAHREN EINES FAHRZEUGS
PROCEDE D'IDENTIFICATION DE L'ETAT D'UNE ROUTE PENDANT LA CONDUITE D'UN VEHICULE

(30) Priority: 08.09.2005 US 596216 P
(43) Date of publication of application: 11.06.2008
(73) Proprietor: VOLVO LASTVAGNAR AB, 405 08 Göteborg (SE)
(72) Inventor: STEEN, Marcus, SE-424 33 Angered (SE); ERIKSSON, Anders, SE-423 49 Torslanda (SE)
(74) Representative: Fröhling, Werner Otto
(86) International application number: PCT/SE2006/000861
(87) International publication number: WO 2007/030051

(56) References cited:
- US-A- 4 569 255
- US-A- 5 911 771
- US-B2- 6 626 797
- US-B2- 6 834 224

## Description

### TECHNICAL FIELD OF THE INVENTION:

The present invention relates to a method for automatically identifying a change in the road condition for a vehicle.

### Heading

### BACKGROUND OF THE INVENTION:

Automatic transmissions of the Automatic Mechanical Transmission (AMT) type have become increasingly common in heavy-duty vehicles as microcomputer technology has continued to advance and has made it possible, with a control computer and a number of control elements, for example servo motors, to precision-control the engine speed, the connection and disconnection of an automated clutch between engine and gearbox and coupling members of the gearbox, relative to one another, so that smooth gearshift is always obtained at the correct rev speed. The advantage with this type of automatic transmission compared to a traditional automatic transmission based on a set of planetary gears and with a hydrodynamic torque converter on the input side is firstly that, particularly as regards use in heavy vehicles, it is simpler and more robust and can be produced at substantially lower cost, and secondly that it has higher efficiency, which means the prospect of lower fuel consumption.

The automatic mechanical transmissions of the type mentioned above strongly reduces the drivers gear shifting work and the driver will not need to worry about selecting the right next gear ratio when driving the vehicle. All this is taken care of within the automatic mechanical transmissions. These known automatic mechanical transmission systems often have a very optimized function for highway traffic (so called distribution and long haul). In these applications a great effort is laid down in maximizing average vehicle speed or minimizing fuel consumption.

When these high way traffic optimized vehicles attempt to operate, or to go off-road, the function of these vehicles in such condition will not be satisfying. In off-road conditions the vehicle has to be driven carefully but also with enough propulsive power to be able to manage big variations in driving resistance (i.e. for example bumps, holes, muddy puddles).

US4569255 shows an arrangement with an automated mechanical transmission where the driver can choose a "high-resistance operation"-position, i. e. off-road, with the gear shift selector. The gearbox will then make the gear selection adapted to off-road conditions. US-A-5,911,771, discloses the features of the preamble of claim 1.

The object of the present invention is to simplify the handling of a vehicle equipped with an automatic mechanical transmission even further, for example in a situation , when driving the vehicle in a high way environment and then into an off-road environment and then back again.

### SUMMARY OF THE INVENTION

The method according to the invention is a method for identifying a road condition during driving of a vehicle.

The vehicle comprises (includes, but is not necessarily limited to) an engine connected to drive at least one wheel of the vehicle via a semi or fully automatic transmission, at least one control unit for receiving input signals and for processing said signals in accordance with programmed logic rules to issue command output signals to said transmission for gear shifting, characterized in that the control unit, when sensing a signal indicative of the presence of a first road condition, is programmed to change gear shifting strategy for said transmission to a gear shifting strategy optimized for said first road condition, if present gear shifting strategy is a second gear shifting strategy for a second road condition, which differs from said first road condition.

The advantage with the method according to the invention is that the driver can keep on driving without doing anything special when going from one road condition to another. The vehicle according to the invention will automatically change gear shifting strategy when needed.

According to one embodiment of the method according to the invention, said control unit is programmed to perform the change when registering that a first predetermined pattern of substantially vertical movement of said vehicle is to be similar to movements of said vehicle when the vehicle is in said first road condition.

According to one further embodiment of the method according to the invention, said road condition signal includes at least a signal generated by a sensor for measuring movement of a cab of the vehicle relative a bodywork of the vehicle.

According to one further embodiment of the method according to the invention, said road condition signal includes at least a signal generated by a sensor for measuring vibrations in the vehicle.

According to one further embodiment of the method according to the invention, said control unit is programmed to perform the change when registering that a predetermined vibration reference value of said vehicle is exceeded.

According to another embodiment of the method according to the invention, said control unit is programmed to perform the change when sensing suddenly changes over time of acceleration, frequency, wave length and/or amplitude for vertical movements of said vehicle or parts of said vehicle. In different embodiments said part of the vehicle can be a wheel, bodywork or a cab of said vehicle. The movement of the wheels relative the bodywork is the strongest parameter when trying to assess which type of road condition the vehicle is currently traveling on.

According to one embodiment of the method according to the invention the vehicle further comprises at least two pairs of wheels. This embodiment is characterized in that the movements of the different wheels in the different wheel pairs are compared and considered when assessing if a gear shifting strategy change is necessary. This is a simple way to register for example if the road has a lot of bumps or holes.

According to a further embodiment of the method according to the invention, the control unit uses signals from a vibration sensor, for measuring the vibrations in the bodywork, when assessing if a gear shifting strategy change is necessary. It is known that the vibrations in the bodywork increases when the vehicle is going off-road. Thus, this is another way to register if the road condition has changed. A combination of registering the movements of different vehicle parts (as above) and measuring vibrations in the bodywork further secures a good assessment of when to shift gear shifting strategy.

Further advantageous embodiments of the invention emerge from the dependent patent claims following patent claim 1.

### BRIEF DESCRIPTION OF THE DRAWING

The present invention will be described in greater detail below with reference to the accompanying drawing which, for the purpose of exemplification, shows further preferred embodiments of the invention and also the technical background, and in which:

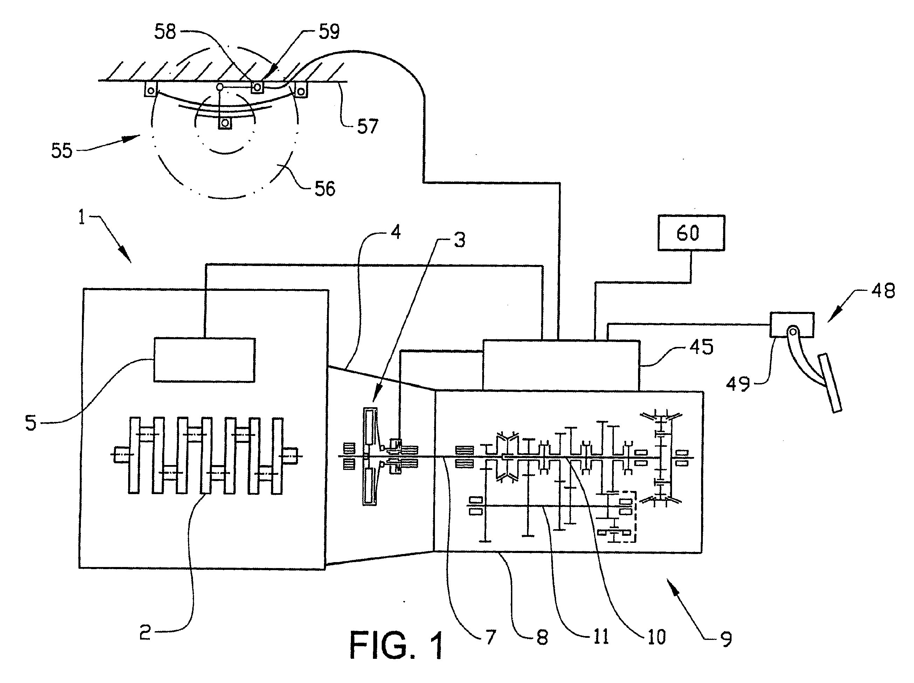

Figure 1 diagrammatically shows a view of an embodiment of the invention.

### DESCRIPTION OF THE INVENTION

In one embodiment the vehicle is equipped with an internal combustion engine 1, for example a diesel engine, with a crankshaft 2 which is coupled to a single-disk dry plate clutch 3, which is enclosed in a clutch case 4. The crankshaft 2 is connected, non-rotatably, to an input shaft 7, which is rotatably mounted in the housing 8 of a gearbox 9. Also rotatably mounted in the gearbox housing 8 are a main shaft 10 and a counter shaft 11. A gear wheel is rotatably mounted on the input shaft and can be locked on the shaft with the aid of a synchronizing device provided with a coupling sleeve, which is mounted in a non-rotatable but axially displaceable manner on a hub connected, non-rotatably, to the output shaft. With the aid of the coupling sleeve, a gear wheel rotatably mounted on the main shaft can be locked relative to the input shaft 7. With the coupling sleeve in a middle position, both the gearwheels are disengaged from their respective shafts. The above mentioned gear wheels, together with the synchronizing device and the coupling sleeve, form a splitter gear.

Disposed in a rotationally secure manner on the counter shaft 11 are further gear wheels, which each engage with a respective gear wheel rotatably mounted on the main shaft 10, which latter gear wheels can be locked on the main shaft with the aid of further coupling sleeves. An output end of the main shaft is arranged to, via a propeller shaft, drive at least a pair of wheels.

All coupling sleeves are displaceable with the aid of servo elements, which can be pneumatically operated piston cylinder devices of the type utilized in a transmission of the kind described above, which is marketed under the trade name I-SHIFT.

A control unit 45 is arranged to control the different pneumatically operated piston cylinder devices for engaging different gear ratios between input shaft 7 and output shaft of the transmission. The control unit 45 is programmed with two different gear shift strategies, one optimized for high way condition and one optimized for off-road condition. Compared to the high way gear shifting strategy the off-road gear shifting strategy is not optimized to achieve as low fuel consumption as possible or as high average vehicle speed as possible. Instead enhanced margins for example in the form of enhanced propulsion power reserves is prioritized together with that the number of gear shiftings are kept to a minimum.

The vehicle is further equipped with a suspension system 55 for the vehicle wheels 56. The suspension system can preferably be of the mechanical spring type or air spring type both combined with a shock absorber system, which can comprise hydraulic or pneumatic telescopic shock absorbers. The mechanical spring can be e.g. of the leaf type (as shown in Fig. 1) or the helical type.

The movement of the wheels relative to the bodywork 57 can be measured by sensors 58 for measuring the vertical movement of the wheels. These sensors can be of a control rod type with a torsion potentiometer 59 that can be fixed to a frame or the bodywork 57 of the vehicle. Both front wheels and rear wheels of the vehicle can be provided with the sensor and the control unit 45 is arranged to receive the information regarding the vertical movement of the different wheels.

In an embodiment of the invention, vibration sensor 60, for measuring the vibrations in the bodywork, can be arranged somewhere in the bodywork 57. The control unit 45 is arranged to receive the signals from the vibration sensor 60. The vibration sensor 60 can be of an accelerometer type using piezoelectrical material to produce signals, although other types of sensors and materials may be used for measuring the vibrations.

The torque delivered from the engine 1 is controlled by a throttle control 48 (usually accelerator pedal) in a known manner. The accelerator pedal position is obtained from an angle sensor 49. The control unit 45 also controls the fuel injection, (i. e. the engine speed and torque via an engine control unit 5) depending on the accelerator pedal position, and the air supply to pneumatic piston-cylinder devices, by means of which e. g. the clutch and the synchronized splitter gear are regulated.

Gear selections and shift decisions are made by the control unit 45 based on certain measured and /or calculated parameters such as vehicle speed, engine speed, rate of change of vehicle speed, rate of change of engine speed, throttle control position, rate of change of throttle control position, actuation of a vehicle braking system, currently engaged gear ratio and the like are known from prior art.

The control unit 45 in the vehicle is according to one embodiment of the invention programmed to register the vertical wheel movements over time and when suddenly acceleration, frequency, wave length and/or amplitude for the vertical wheel movement changes over time, the control unit 45 will interpret this as the road condition has been changed. Immediately the control unit 45 will change gear shifting strategy and the performance of the transmission will be optimized for the new road condition.

In another preferred embodiment of the invention when the vertical movement of the wheel changes according to a predetermined pattern, the control unit 45 will interpret this as a road condition change and the gear shifting strategy will be changed accordingly. The predetermined pattern is preferably stored in a memory of the control unit 45.

In a further developed embodiment (not shown) of the invention the control unit 45 is programmed to compare the movement of one or two front wheels relative to corresponding wheels in the rear of the vehicle. When, for example, one of the front wheels first hits a bump and then after a certain time the rear wheel on the same side of the vehicle hits the same bump the movements are registered and compared to each other. If there is more than a certain predetermined amount of registered bumps or holes, that will indicate that the road condition has changed and the control unit will immediately change the gear shifting strategy accordingly. The predetermined amount is preferably stored in a memory of the control unit 45. The front and rear wheels can be wheels arranged in the front and in the rear of the vehicle respectively. The front and rear wheels can also be front and rear wheels in e. g. a bogie wheel configuration in a vehicle.

In another further developed embodiment of the invention, the control unit 45 is programmed to register signals from the vibration sensor 60. When the frequency and/or amplitude of the vibration changes, the control unit 45 will interpret this as a road condition change and the gear shifting strategy will be changed accordingly. Predetermined reference values for frequencies and amplitudes is preferably stored in a memory of the control unit 45. For example a plane and horizontal highway in good shape could have reference values stored which correspond to small vibration ripples , i. e. vibrations with small amplitudes and high frequencies. Corresponding reference values for off road would have a variety of different frequencies and with considerably bigger amplitudes. The control unit 45 can be programmed to continuously compare the reference values with the prevailing road condition. The reference values could be one average value for frequency and one for amplitude, which could represent e. g. a variety of conditions classified as off road. If the prevailing road condition is a high way condition the control unit 45 would execute a gear shifting strategy optimized for such high way condition and continuously compare with vibration reference values for an off road condition. When the control unit 45 via the vibration sensor 60 registers vibrations with a bigger variety of frequencies and with higher amplitudes compared to the reference values for off road, the control unit 45 would interpret this as a change in road condition and the gear shifting strategy would be adjusted accordingly. Other grouping of the road conditions than off road and high way is possible. For example it is possible to have several different quality levels of the road condition, from landing strip quality to ploughed field quality.

In another further developed embodiment of the invention, the control unit 45 is programmed to register vertical movements of a cab (not shown) of the vehicle relative the bodywork of the vehicle. In a preferred embodiment of the invention the cab is equipped with a cab suspension system for increased travel comfort. As in above mentioned embodiments the control unit 45 can be programmed to sense changes over time for acceleration, frequency, wave length and/or amplitude for the cab movement. The control unit 45 can be programmed to interpret this change as a road condition change. In a further embodiment of the invention a change of the road condition can be registered by comparing predetermined cab movement patterns for different road conditions with the prevailing sensed road condition. When the control unit registers that the prevailing cab movements are similar to one of the predetermined patterns, which do not correspond to the prevailing gear shifting strategy, a road condition change is registered and a gear shifting strategy corresponding to the new road condition is implemented.

The in figure 1 showed embodiment comprises both the vibration sensor 60 and the wheel movement sensor 58. It is possible to have embodiments according to the invention with only one of the above mentioned ways of sensing the movements of the vehicle or parts of the vehicle (such as a wheel) for identifying the road condition, or a combination of two or several of the above mentioned ways. When using several ways a more secure signal for which road condition is prevailing will be achieved.

The invention should not be deemed to be limited to the embodiments described above, but rather a number of further variants and modifications are conceivable within the scope of the following patent claims.

## Claims

1. A method for identifying a road condition during driving of a vehicle, said vehicle comprising an engine (1) connected to drive at least one wheel of the vehicle via a semi or fully automatic transmission (9), at least one control unit (45) for receiving input signals and for processing said signals in accordance with programmed logic rules to issue command output signals to said transmission (9) for gear shifting, and where said control unit (45), when sensing a signal indicative of the presence of a first road condition, is programmed to change gear shifting strategy for said transmission (9) to a gear shifting strategy optimized for said first road condition, if present gear shifting strategy is a second gear shifting strategy for a second road condition, which differs from said first road condition, **characterized in that** said control unit (45) is programmed to perform the change when a sensor arranged in the vehicle is sensing sudden changes over time of acceleration, frequency, wave length and/or amplitude for vertical movements of said vehicle or parts of said vehicle.

2. The method as claimed in claim 1, **characterized in that** said control unit (45) is programmed to perform the change when registering that a first predetermined pattern of substantially vertical movement of said vehicle is to be similar to movements of said vehicle when the vehicle is in said first road condition.

3. The method as claimed in claim 1, **characterized in that** said road condition signal includes at least a signal generated by a sensor for measuring movement of a cab of the vehicle relative a bodywork of the vehicle.

4. The method as claimed in claim 1, **characterized in that** said road condition signal includes at least a signal generated by a sensor (60) for measuring vibrations in the vehicle.

5. The method as claimed in the preceding claim, **characterized in that** said control unit (45) is programmed to perform the change when registering that a predetermined vibration reference value of said vehicle is exceeded.

6. The method as in claim 1, **characterized in that** said part of the vehicle is at least one wheel (56) of the vehicle movable at least in a vertical way relative a bodywork of the vehicle.

7. The method as claimed in the preceding claim, the vehicle further comprising at least two pairs of wheels, **characterized in that** also the substantially vertical movements of the different wheels in the different wheel pairs are compared and considered, when assessing if the road condition has been changed.

8. The method as claimed in one of the preceding claims, **characterized in that**, said first road condition being an off-road condition and said second road condition being a high-way condition.

## Patentansprüche

1. Verfahren zur Identifizierung eines Straßenzustands während des Fahrens eines Fahrzeugs, wobei das Fahrzeug
- einen Motor (1), der zum Antreiben wenigstens eines Rads des Fahrzeugs über ein halb- oder vollautomatisches Getriebe (9) verbunden ist,
- wenigstens eine Steuereinheit (45) zum Empfangen von Eingangssignalen und zur Verarbeitung der Signale gemäß programmierter Logikregeln zur Ausgabe von Befehlsausgangssignalen an das Getriebe (9) zur Gangschaltung umfasst,
- wobei die Steuereinheit (45) so programmiert ist, dass sie bei Erfassung eines Signals, das das Vorhandensein eines ersten Straßenzustands anzeigt, die Gangschaltstrategie für das Getriebe (9) zu einer Gangschaltstrategie ändert, die für den ersten Straßenzustand optimiert ist, falls die momentane Gangschaltstrategie eine zweite Gangschaltstrategie für einen zweiten Straßenzustand ist, die sich von dem ersten Straßenzustand unterscheidet,
**dadurch gekennzeichnet, dass**
- die Steuereinheit (45) so programmiert ist, dass sie die Änderung durchführt, wenn ein in dem Fahrzeug angeordneter Sensor plötzliche Änderungen über die Zeit der Beschleunigung, der Frequenz, der Wellenlänge und/oder der Amplitude für vertikale Bewegungen des Fahrzeugs oder von Teilen des Fahrzeugs erfasst.

2. Verfahren nach Anspruch 1, **dadurch gekennzeichnet, dass** die Steuereinheit (45) so programmiert ist, dass sie die Änderung durchführt, wenn sie registriert, dass ein erstes vorherbestimmtes Muster einer im Wesentlichen vertikalen Bewegung des Fahrzeugs ähnlich Bewegungen des Fahrzeugs ist, wenn das Fahrzeugs sich in dem ersten Straßenzustand befindet.

3. Verfahren nach Anspruch 1, **dadurch gekennzeichnet, dass** das Straßenzustandssignal wenigstens ein Signal einschließt, das durch einen Sensor zum Messen der Bewegung einer Kabine des Fahrzeugs relativ zu einer Karosserie erzeugt wird.

4. Verfahren nach Anspruch 1, **dadurch gekennzeichnet, dass** das Straßenzustandssignal wenigstens ein Signal einschließt, das durch einen Sensor (60) zum Messen von Vibrationen in dem Fahrzeug erzeugt wird.

5. Verfahren nach dem vorhergehenden Anspruch, **dadurch gekennzeichnet, dass** die Steuereinheit (45) so programmiert ist, dass sie die Änderung durchführt, wenn sie registriert, dass ein vorherbestimmter Vibrationsreferenzwert des Fahrzeugs überschritten wird.

6. Verfahren nach Anspruch 1, **dadurch gekennzeichnet, dass** der Teil des Fahrzeugs wenigstens ein Rad (56) des Fahrzeugs ist, das relativ zu einer Karosserie des Fahrzeugs wenigstens vertikal beweglich ist.

7. Verfahren nach dem vorhergehenden Anspruch, wobei das Fahrzeug weiterhin wenigstens zwei Räderpaare umfasst, **dadurch gekennzeichnet, dass** auch die im Wesentlichen vertikalen Bewegungen der unterschiedlichen Räder in den unterschiedlichen Räderpaaren verglichen und berücksichtigt werden, wenn bewertet wird, ob sich der Straßenzustand geändert hat.

8. Verfahren nach einem der vorhergehenden Ansprüche, **dadurch gekennzeichnet, dass** der erste Straßenzustand ein Geländezustand ist und der zweite Straßenzustand ein Autostraßenzustand ist.

## Revendications

1. Procédé pour identifier l'état d'une route pendant la conduite d'un véhicule, le véhicule comprenant un moteur (1) relié pour entraîner au moins une roue du véhicule par l'intermédiaire d'une transmission semi- ou entièrement automatique (9), au moins une unité de commande (45) pour recevoir des signaux d'entrée et pour traiter les signaux conformément à des règles logiques programmées pour émettre des signaux de sortie donnant instruction à la transmission (9) de changer de vitesse, et où l'unité de commande (45), lors de la détection d'un signal représentatif de la présence d'un premier état de route, est programmée pour changer la stratégie de changement de vitesse de la transmission (9) pour une stratégie de changement de vitesse optimisée pour le premier état de route, si une stratégie de changement de vitesse présente est une seconde stratégie de changement de vitesse pour un second état de route, qui est différent du premier état de route, **caractérisé en ce que** l'unité de commande (45) est programmée pour effectuer le changement lorsqu'un détecteur agencé dans le véhicule détecte des changements soudains avec le temps de l'accélération, la fréquence, la longueur d'onde et/ou l'amplitude de mouvements verticaux du véhicule ou de parties du véhicule.

2. Procédé selon la revendication 1, **caractérisé en ce que** l'unité de commande (45) est programmée pour effectuer le changement lors d'un enregistrement qu'un premier motif prédéterminé de mouvement sensiblement vertical du véhicule doit être similaire à des mouvements du véhicule lorsque le véhicule est dans le premier état de route.

3. Procédé selon la revendication 1, **caractérisé en ce que** le signal d'état de route comprend au moins un signal produit par un détecteur destiné à mesurer un mouvement d'une cabine du véhicule par rapport à une carrosserie du véhicule.

4. Procédé selon la revendication 1, **caractérisé en ce que** le signal d'état de route comprend au moins un signal produit par un détecteur (60) destiné à mesurer des vibrations du véhicule.

5. Procédé selon la revendication précédente, **caractérisé en ce que** l'unité de commande (45) est programmée pour effectuer le changement lors de l'enregistrement qu'une valeur de référence de vibration prédéterminée du véhicule est dépassée.

6. Procédé selon la revendication 1, **caractérisé en ce que** la partie du véhicule est au moins une roue (56) du véhicule mobile au moins d'une manière verticale par rapport à une carrosserie du véhicule.

7. Procédé selon la revendication précédente, le véhicule comprenant de plus au moins deux paires de roues, **caractérisé en ce que** les mouvements sensiblement verticaux des différentes paires de roues sont également comparés et considérés, lorsqu'on évalue si l'état de route a été changé.

8. Procédé selon l'une quelconque des revendications précédentes, **caractérisé en ce que** le premier état de route est un état de tout terrain et le second état de route est un état de route.
